# EUROPEAN PATENT SPECIFICATION

(11) **EP 1 895 808 B1**
(45) Date of publication and mention of the grant of the patent: **18.01.2012**
(21) Application number: 06017964.5
(22) Date of filing: 29.08.2006
(51) Int. Cl.: H04Q 11/00

(54) **Optical switch and optically switched communication network**
Optischer Schalter und optisch geschaltetes Netz
Commutateur optique et réseau à commutation optique

(43) Date of publication of application: 05.03.2008
(73) Proprietor: Koninklijke KPN N.V., 2516 CK The Hague (NL)
(72) Inventor: Baken, Nicolaius Henricus Gerardus, 2271 EE Voorburg (NL)
(74) Representative: Wuyts, Koenraad Maria

(56) References cited:
- WO-A-96/09736
- WO-A2-02/21746
- US-A- 5 541 756
- US-A- 5 657 144
- US-A1- 2001 028 488

## Description

### Technical field of the invention

The invention relates to an optical switch comprising an input for receiving an input optical signal having a first color and comprising data, an output associated with a second color, color detection means, coupled to the input for determining whether the first color corresponds to the second color, the output being coupled to the color detection means for outputting an output optical signal, only if the first color corresponds to the second color.

The invention further relates to an optical circuit and a communication network comprising such an optical circuit and an optical signal to be routed through such an optical switch.

### Background of the invention

Tn present day (tele-)communication networks, often glass fibers are used for transmitting data. In such communication networks, the data travels almost at the speed of light. However, for routing the optical signals through the communication network, manipulation at the electrical level is required at the interconnections of the fibers. This transformation from light to electrical signals, and back to light again, is time-intensive.

The international patent application WO 02/21746 describes a (Dense) Wavelength Division Multiplexing ((D)WDM) system. (D)WDM is a technology which multiplexes multiple optical carrier signals on a single optical fiber by using different wavelengths (colors) of laser light to carry different signals. This allows for a multiplication in capacity, in addition to making it possible to perform bidirectional communications over one strand of fiber. The system described in WO 02/21746 includes a first client that includes an optical interface. A first optical network element is coupled to the optical interface. A second optical network element is coupled to the first optical network element. The first and second optical network elements each include a mechanism for routing wavelengths under the control of the client. The optical network elements may use optical-optical switches for adding or dropping selected wavelengths at the node where the optical network element is situated. The system includes a plurality of network elements where each element is configured to add/drop different numbers of wavelengths, while passing the others onward.

It is a disadvantage of the system described in WO 02/21746 that a unique wavelength is required for each route through the network. When many users are connected to the network the required number of available wavelengths soon gets out of hand.

US 5 657 144 A (TANAKA KAZUHIRO ET AL) 12 August 1997 (1997-08-12), discloses an optical processing device for converting a wavelength of an optical signal and an optical matrix switch that uses the device.

### Summary of the invention

It is an object of the invention to provide an optical circuit as described in the opening paragraph which optical circuit enables building larger networks.

According to a first aspect of the invention, this object is achieved by providing an optical switch comprising an input for receiving an input optical signal having a first color and comprising data and a color sequence code, an output associated with a second color, color detection means, coupled to the input for determining whether the first color corresponds to the second color, a code extractor, coupled to the color detection means, for, only if the first color corresponds to the second color, extracting from the color sequence code a next color, different from the first color, and a color converter, coupled to the code extractor, for color converting the input optical signal to the next color to obtain a converted optical signal, the output being coupled to the color converter for outputting the converted optical signal.

The first color of the input optical signal determines whether the optical switch is going to pass on the signal. The optical switch then extracts the next color from the color sequence code and color converts the optical signal to said next color. The optical switch is thus capable of converting a single input color into multiple different output colors. The optical signal with the next color may then be provided to a subsequent optical switch that may or may not accept and convert the converted optical signal.

While the color of the optical signal is converted, the data content and color sequence code may be kept unchanged. Alternatively, the extracted next color may be removed from the color sequence code after being extracted. When removing the extracted next code from the color sequence code, a code extractor of a next optical switch should also extract a first color of the color sequence code.

According to a second aspect of the invention, an optical circuit is provided for routing an input optical signal from a first optical conductor in a communication network to a second optical conductor in the communication network, the optical circuit comprising an optical switch as described above, the color sequence code defining a path through the communication network via a sequence of optical conductors comprising the first optical conductor and the second optical conductor, the first optical conductor being coupled to the input of the optical switch for providing the input optical signal, the second optical conductor being coupled to the output of the optical switch for receiving the converted signal.

In the system of WO 02/21746, the entire path of the optical signal is defined by the color of the optical signal and each available path requires its own color. In a network using optical switches according to the invention, colors may be used more than once. Only the color sequence codes have to be unique for creating unique paths. The number of codes in the color sequence code corresponds to the number of conductors in a path. If the color code sequence is long enough, even with a limited amount of different colors, a very large amount of users may be interconnected via optical switches according to the invention.

Preferably, the optical circuit comprises a further optical switch for coupling the first optical conductor to a fourth optical conductor in the communication network, the further optical switch comprising an input for receiving the input optical signal, an output associated with a fourth color and coupled to the fourth optical conductor, color detection means, coupled to the input for determining whether the first color corresponds to the fourth color, a code extractor, coupled to the color detection means, for, only if the first color corresponds to the fourth color, extracting from the color sequence code a fifth color, different from the first color, and a color converter, coupled to the code extractor, for color converting the input optical signal to the fifth color to obtain a further converted optical signal, the output being coupled to the color converter for outputting the further converted optical signal onto the fourth optical conductor.

An optical signal applied to the first conductor may thus be passed on to the second or fourth conductor, dependent on the color of the optical signal. This optical circuit is a very useful building block for construction of a large communication network.

In a preferred embodiment at least one of the optical conductors of the sequence of optical conductors is a ring of glass fiber.

It is an advantage of this embodiment that a signal that is inserted into the conductor halfway between two optical switches will be conducted along both optical switches and may thus be picked up by either one of the optical switches. Such an annular conductor is very suitable for integrating in a larger communication network.

According to a third aspect of the invention, a communication network is provided for providing an cnd-to-end communication path between a source node and a destination node, the communication network comprising the source node, the destination node and interconnected optical circuits as described above, the end-to-end communication path being associated with a unique color sequence code, the source node being coupled to the first optical conductor of a first one of the interconnected optical circuits, the destination node being coupled to the second optical conductor of a last one of the interconnected optical circuits, the source node comprising signal generating means for supplying the input optical signal comprising the unique color sequence code to the first optical conductor of the first one of the interconnected optical circuits and having a color corresponding to an output of the first one of the optical circuits, the destination node comprising signal receiving means for receiving a converted optical signal if the color of the converted optical signal corresponds to a destination color associated with the destination node.

As opposed to the prior art communication network (WO 02/21746), this communication network does not require unique colors for each available communication path, but only unique color sequence codes. As a consequence the network can easily be made much larger and may comprise many more nodes.

According to a fourth aspect of the invention, a communication network is provided for providing an end-to-end communication path between a source node and a destination node, the communication network comprising the source node, the destination node and interconnected optical circuits as described above, the source node being coupled to the first optical conductor of a first one of the interconnected optical circuits, the destination node being coupled to the second optical conductor of a last one of the interconnected optical circuits and being associated with a unique color sequence code, the communication network further comprising a central optical conductor, the unique color sequence code defining a path from the central optical conductor to the destination node, the end-to-end communication path comprising a path from the source node to the central optical conductor and the path from the central optical conductor to the destination node, the source node comprising signal generating means for supplying the input optical signal comprising the unique color sequence code to the first optical conductor of the first one of the interconnected optical circuits, the destination means comprising signal receiving means for receiving a converted optical signal if thc color of the converted optical signal corresponds to a destination color associated with the destination node.

With this communication network, the number of unique color sequence codes is considerably reduced. Instead of unique color sequence codes for all possible communication paths (from each node to each other node and back), only one unique color sequence code is required for each node. All optical signals are sent to the central optical conductor and are then directed to the destination node corresponding to the color sequence code comprised in the optical signal. The communication network may comprise additional central optical conductors being associated with colors, different from a color associated with the first central optical conductor.

In a preferred embodiment, the optical signal further comprises a direction bit for indicating whether the optical signal is traveling towards or away from the central optical conductor.

As long as the optical signal is traveling towards the central optical conductor, the optical switches may ignore the color sequence code and send the optical signal towards the central ring. At the first optical switch of the central optical conductor, the bit direction bit is changed and the further routing of the signal is performed in dependence of the color sequence code.

According to a fifth aspect of the invention an optical signal is provided having a color and comprising data and a color sequence code, the color sequence code defining a path through a communication network via a sequence of optical conductors, each optical conductor of the sequence of optical conductors being coupled to at least one other optical conductor via an optical switch, an output of the optical switch being associated with a color and each subsequent color in the color sequence code corresponding to an output of a subsequent optical switch in the path.

These and other aspects of the invention are apparent from and will be elucidated with reference to the embodiments described hereinafter.

### Brief description of the drawings

In the drawings:
figure 1a schematically shows an optical circuit according to the current invention,
Figure 1b schematically shows an optical switch for use in the optical circuit of figure 1a,
Figure 2 schematically shows another embodiment of an optical circuit according to the invention,
Figure 3 schematically shows a small communication network according to the invention,
Figure 4 schematically shows a larger communication network according to the invention, and
Figures 5a and 5b schematically show two examples of signal conversion in the optical switches.

### Detailed description of the invention

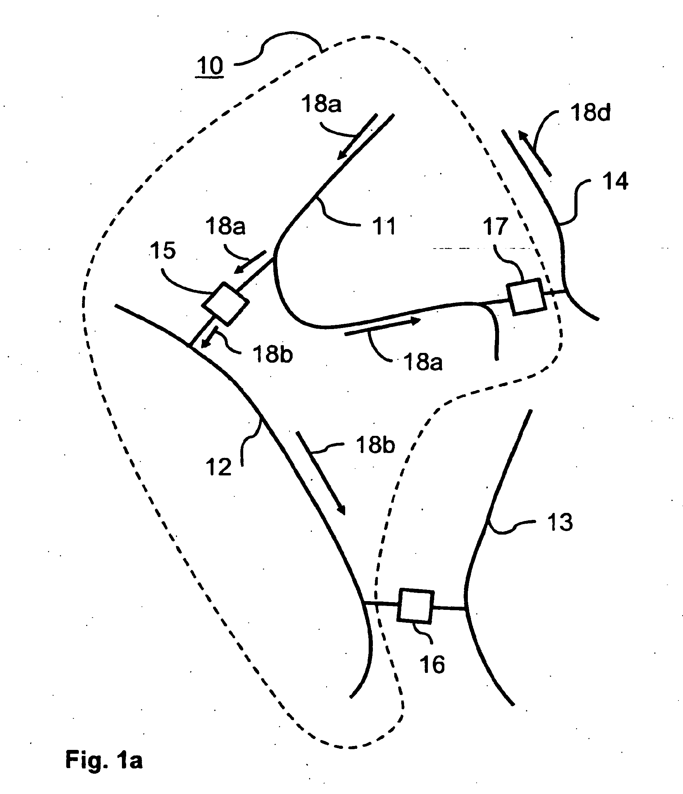

Figure 1a schematically shows an optical circuit 10 according to the current invention. The optical circuit 10 comprises a first optical conductor 11, a second optical conductor 12 an optical switch 15 and an optional additional optical switch 17. The optical switch 15 couples the first optical conductor 11 to the second optical conductor 12. The additional optical switch 17 couples the optical circuit 10 to the fourth optical conductor 14. The optical circuit 10 is also coupled to a third optical conductor 13, via a third optical switch 16. Preferably, all optical conductors are glass fibers. The optical conductors may comprise separate glass fibers for up- and downlink traffic. Each optical conductor may comprise separate fibers for each color used, or may combine signals with different colors in one fiber, e.g., using a (D)WDM system. DWDM systems arc already available, which systems can send more than 100 different colors over one fiber.

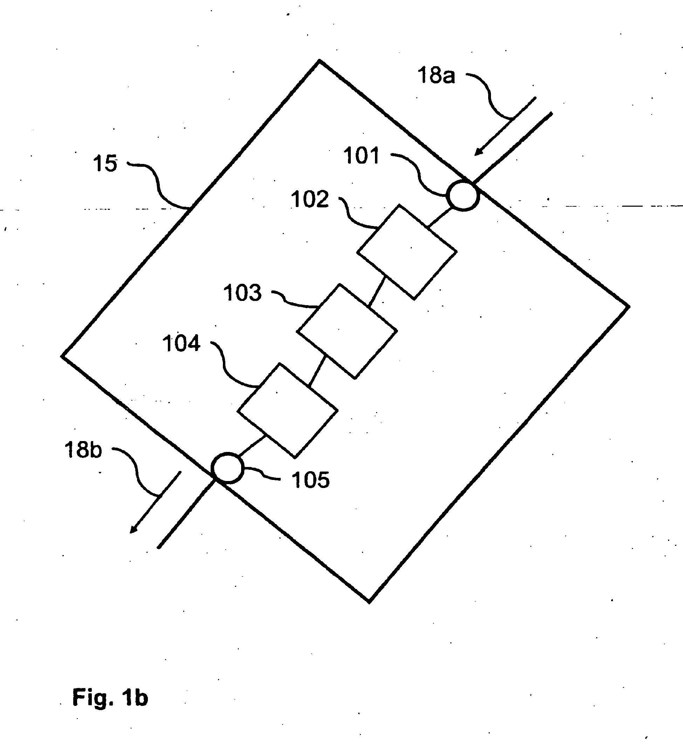

Figure 1a also shows an optical signal 18a which has been inserted into the first conductor 11. The optical signal 18a comprises data and a color sequence code. The optical signal is created by a light source, preferably a laser source capable of providing laser light at various wavelengths. The color sequence code defines a path through a communication network. The communication network comprises optical circuits 10 as shown in figure 1 for routing the optical signal 18a along the path. The path leads through a sequence of optical conductors to its destination. Each optical conductor is associated with a color. The color sequence code in the optical signal 18a corresponds to the sequence of optical conductors in the path to be followed. The optical switch 15 couples the first optical conductor 11 to the second optical conductor 12. If the color of the optical signal 18a corresponds to the color with which the second optical conductor 12 is associated, the optical signal 18a should be passed on from the first optical conductor 11 to the second optical conductor 18b and the wavelength conductor 15 starts processing the optical signal 18a. From the color sequence code, the optical switch 15 reads the next color, The next color defines the optical conductor to which the signal 18a should go after the second conductor 12. If the color sequence code indicates that the signal 18a should be routed to the third optical conductor 13, the optical switch 15 changes the color of the optical signal to the color with which the third optical conductor 13 is associated. The changing of the color of the optical signal 18a is performed without changing the content of the signal 18a. The color converted optical signal 18b thus holds the same information as the original optical signal 18a and has the color which is associated with the third optical conductor 13.

Figure 1b schematically shows an optical switch 15 for use in the optical circuit 10 of figure 1a. The optical switch 15 comprises an input 101 for receiving the input signal 18a. The color detection means 102 check whether the color of the input signal 18a corresponds to the color associated with the output 105. If these colors arc corresponding, then code extractor 103 extracts from the color sequence code a next color. The next color of the sequence may, e.g., correspond to a destination color, associated with a final destination node of the optical signal. The next color may also correspond to the color associated with an output of a subsequent optical switch 16 that should pick up the signal for further processing. A color converter 104 converts the input optical signal 18a to the next color. While the color of the input optical signal 18b is converted, the data content and color sequence code may be kept unchanged. Alternatively, the extracted next color may be removed from the color sequence code after being extracted. When removing the extracted next code from the color sequence code, a code extractor 103 of a next optical switch should also use the first color of the color sequence code. In this event, the code extractor 103 does not need information about which color to extract from the color sequence code.

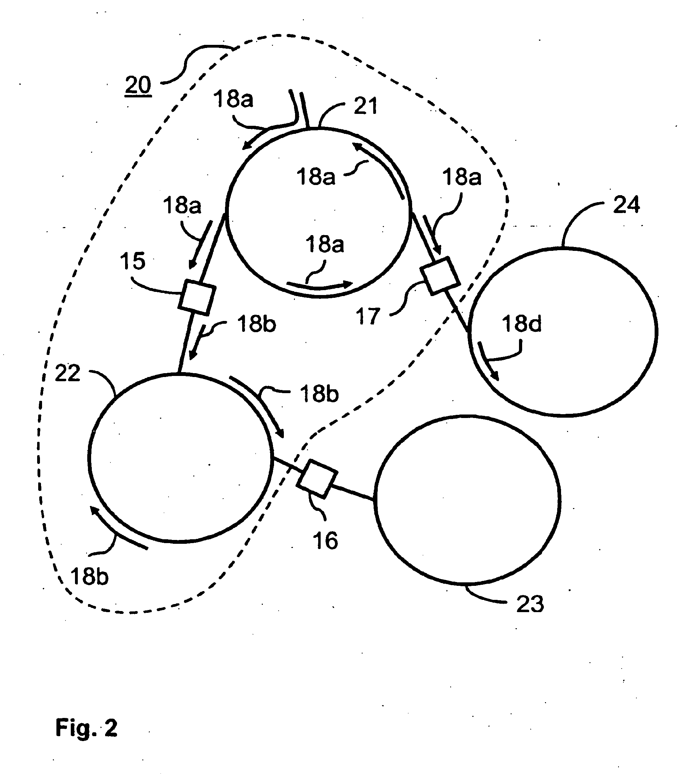

Figure 2 schematically shows another embodiment of an optical circuit 20 according to the invention. In this embodiment the conductors are rings of optical fiber 21, 22, 23, 24, preferably glass fiber. It is an advantage of this embodiment that a signal that is inserted into the conductor halfway between two optical switches will be conducted along both optical switches and may thus be picked up by either one of the optical switches. Such an annular conductor is very suitable for integrating in a larger communication network. It is another advantage of the use of the rings that when a conductor breaks at one point, the optical signal may still reach the next conductor via an alternative route. Such alternative routes may be already available before the breaking of the conductor or may be created by rearranging or reprogramming the wavelength conductors.

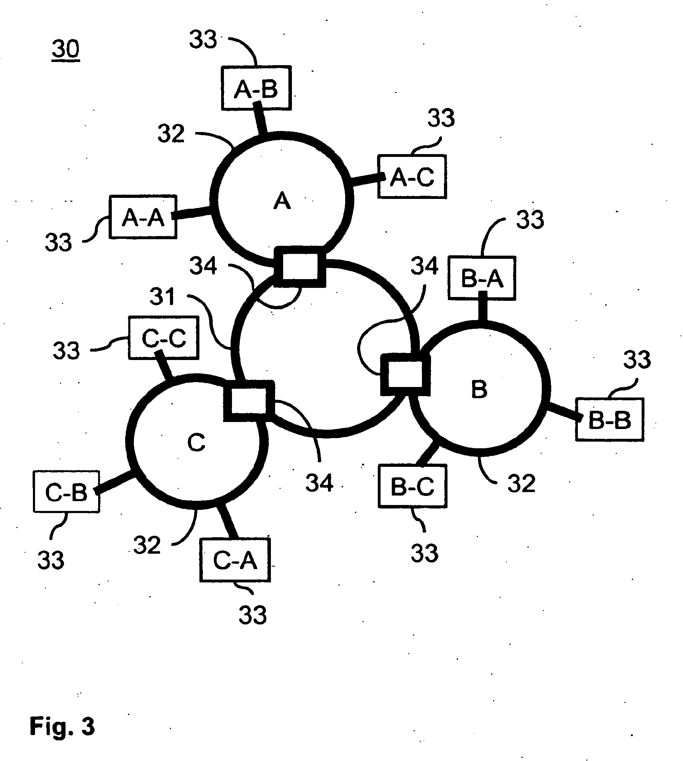

Figure 3 schematically shows a small communication network 30 according to the invention. For this network 30, annular shaped optical conductors 31, 32 are used. The three outer rings 32 are each connected to the central ring 31 via an optical switch 34. Three nodes 33 are connected to each one of the outer rings 32. The small communication network 30 uses three different colors A, B and C. Each outer ring is associated with one of these colors. Also each node 33 is associated with one of the three colors. Consequently, each node 33 in the network 30 can be associated with a color sequence code comprising two colors, the first color indicating the outer ring 32 to which the node 33 is connected and the second color indicating the color associated with the node 33 itself . Nine unique codes are thus used for defining routes from the central ring 31 to the nine different nodes 33: A-A, A-B, A-C, B-A, B-B, B-C, C-A, C-B, C-C. If data is transmitted from access-point A-B to access-point C-A, the routing is done as follows:
1. Data is sent by the node A-B through outer ring A,
2. The wavelength-converter 34 on ring A reads from the header that the data has as destination C-A. Since the destination is on ring C, the wavelength-converter 34 converts the data into wavelength C and passes it on to the central ring 31.
3. The wavelength-converter 34, coupling outer ring C to the central ring 31 detects the signal with color C and reads that part of the signal has destination C-A.
4. It converts the signal to wavelength A and passes it on to outer ring C; subsequently access-point C-A receives the signal.

The route from the central ring 31 to the node 33 is defined by the color sequence code. The route from the node 33 to the central ring 31 may be realized in various ways. For example, separate optical fibers may be provided for upstream (to the central ring 31) and downstream (to the nodes 33) traffic, the upstream data automatically being routed to the central ring 31 and the downstream data being routed in accordance with the color sequence code in the signal. Alternatively, a direction bit in the header of the signal may indicate whether the signal is traveling upstream or downstream. The node 33 may also extend the color sequence code with an inverted code corresponding to the source node. By traversing a color sequence code from the last color back to the first one, the route from the central ring 31 to the node 33 is traversed backwards.

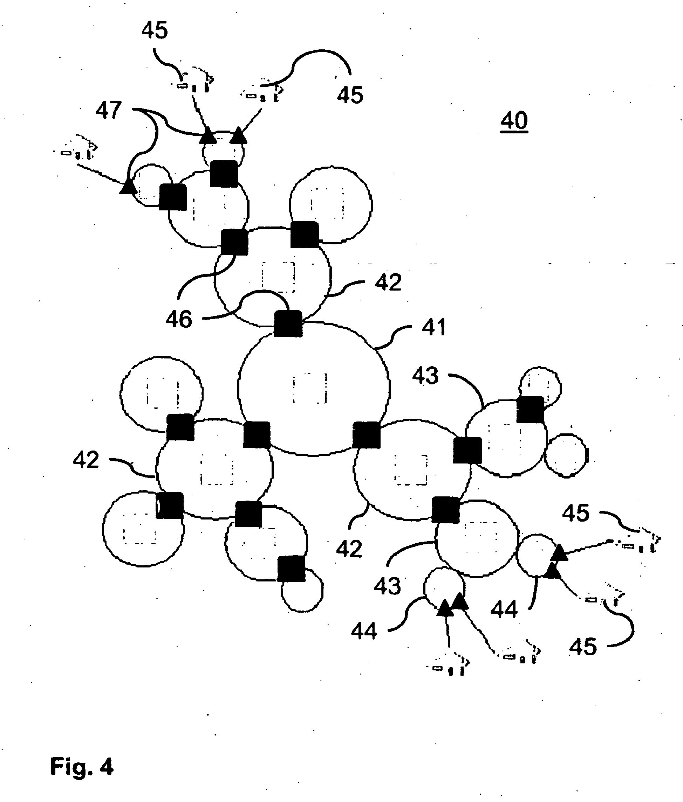

Figure 4 schematically shows a larger communication network 40 according to the invention. The rings 41, 42, 43, 44 are structured hierarchically. The central ring 41 forms the highest hierarchical level. Three rings 42 arc coupled to the central ring 41. Each ring at a lower hierarchical level is coupled to one ring at a higher hierarchical level. To most rings at a higher hierarchical level multiple lower level rings are connected. The nodes 45 are the end points in the network. The nodes are coupled to the lowest level rings 44, by node coupling means 47. The function of the node coupling means 47 is similar to the function of the optical switches 46. The node coupling means do not have to convert the color of the signal, because no further routing of the signal is needed. The nodes 45 or the node coupling means 47 have to convert the data to be sent into colored optical signals comprising the color sequence code and, optionally, additional header information. The maximum number of nodes 45 that can be connected to the communication network 40 depends on the number of different colors that is available and the number of hierarchical layers in the network 40.

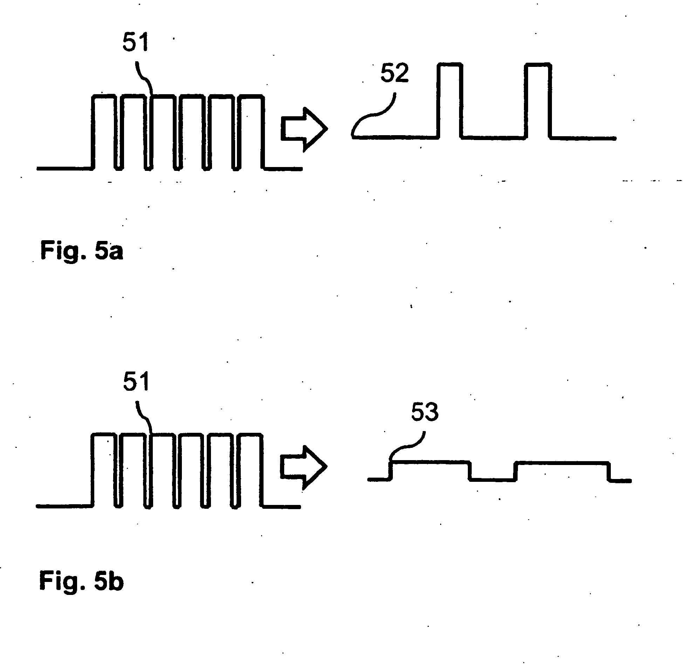

Figures 5a and 5b schematically show two examples of signal conversion in the optical switches. The optical switch must be able to convert signals with a single or several incoming wavelengths into a single or several outgoing wavelengths. Signals with several different colors may be transported separately over individual input fibers, or multiple colors may be sent over one fiber. Signals of different colors may be separated in the time domain. For example, the input signal 51 may comprise sequential signal peaks of blue, red, green, ..., blue, red and green light. The optical switch takes the signal with one color, e.g. red, from the input signal 51 and converts it to a color determined by the color sequence code, e.g. blue or yellow.

To facilitate the multiplexing in the time domain in the higher levels of the network (where the traffic of a large number of nerve nodes is handled), large traffic volumes need to be transmitted in very short time intervals. We call this 'micro-bursts'. The brief and extremely high transmission peaks, must be converted to the outgoing wavelength. Also the hierarchically lower optical switches and even the customer equipment at the end of the route should be able to handle these micro-bursts. In practice this implies that the equipment will receive data during a very short period of time, while during a large fraction of the time nothing happens. This suggests inefficient use of available resources; this need not be a problem.

Figure 5b shows a possible solution to this problem. The shown solution is to spread the peaks over a larger time interval, when transferring from hierarchically higher to lower rings. The optical switch needs to handle a smaller bit rate during a longer period of time. By expanding the micro-bursts, the traffic flow is of a more continuous nature at a lower bit rate. The optical switch needs to be equipped with time-compression and -expansion possibilities.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct clements, and by means of a suitably programmed computer. In the claims enumerating several means, several of these means may be embodied by one and the same item of hardware. The mere fact that certain measures are recited in mutually different dependent claims does not indicate that a combination of these measures cannot be used to advantage.

## Claims

1. An optical switch (15) in a communication network comprising:
- an input (101) for receiving an input optical signal (18a) having a first pass-on color and comprising data and a color sequence code, the color sequence code defining a path through the communication network
- an output (105) associated with a second color,
- color detection means (102), coupled to the input (101) for determining whether the first pass-on color corresponds to the second color,
- a code extractor (103), coupled to the color detection means (102), for, only if the first pass-on color corresponds to the second color, extracting from the color sequence code a next color, different from the first pass-on color, and
- a color converter (104), coupled to the code extractor, for color converting the input optical signal (18a) to the next color to obtain a converted optical signal (18b), the next color defining the next output to which the converted optical signal should go,
- the output (105) being coupled to the color converter (104) for outputting the converted optical signal (18b).

2. An optical circuit (10) for routing an input optical signal (18a) from a first optical conductor (11) in the communication network to a second optical conductor (12) in the communication network, the optical circuit comprising an optical switch (15) as claimed in claim 1,
the color sequence code defining a path through the communication network via a sequence of optical conductors (11, 12,13) comprising the first optical conductor (11) and the second optical conductor (12),
the first optical conductor (11) being coupled to the input (101) of the optical switch (15) for providing the input optical signal (18a),
the second optical conductor (12) being coupled to the output (105) of the optical switch (15) for receiving the converted signal (18b), and
the next color defining the optical conductor to which the converted optical signal should go after the second optical conductor.

3. An optical circuit (10) as claimed in claim 2, comprising a further optical switch (17) for coupling the first optical conductor (11) to a fourth optical conductor (14) in the communication network, the further optical switch (17) comprising:
- an input for receiving the input optical signal (18a),
- an output associated with a fourth color and coupled to the fourth optical conductor (14)
- color detection means, coupled to the input for determining whether the first color corresponds to the fourth color,
- a code extractor, coupled to the color detection means, for, only if the first color corresponds to the fourth color, extracting from the color sequence code a fifth color, different from the first color, and
- a color converter, coupled to the code extractor, for color converting the input optical signal (18a) to the fifth color to obtain a further converted optical signal (18b),
- the output being coupled to the color converter for outputting the further converted optical signal (18b) onto the fourth optical conductor (14).

4. An optical circuit (20) as claimed in claim 2, wherein at least one of the optical conductors of the sequence of optical conductors is a ring of glass fiber (21, 22, 23, 24).

5. A communication network for providing an end-to-end communication path between a source node and a destination node, the communication network comprising the source node, the destination node and interconnected optical circuits as claimed in claim 2, the end-to-end communication path being associated with a unique color sequence code,
the source node being coupled to the first optical conductor of a first one of the interconnected optical circuits,
the destination node being coupled to the second optical conductor of a last one of the interconnected optical circuits,
the source node comprising signal generating means for supplying the input optical signal comprising the unique color sequence code to the first optical conductor of the first one of the interconnected optical circuits and having a color corresponding to an output of the first one of the optical circuits,
the destination node comprising signal receiving means for receiving a converted optical signal if the color of the converted optical signal corresponds to a destination color associated with the destination node.

6. A communication network (40) for providing an end-to-end communication path between a source node and a destination node, the communication network comprising the source node, the destination node and interconnected optical circuits as claimed in claim 2,
the source node being coupled to the first optical conductor of a first one of the interconnected optical circuits,
the destination node being coupled to the second optical conductor of a last one of the interconnected optical circuits and being associated with a unique color sequence code,
the communication network further comprising a central optical conductor, the unique color sequence code defining a path from the central optical conductor to the destination node, the end-to-end communication path comprising a path from the source node to the central optical conductor and the path from the central optical conductor to the destination node,
the source node comprising signal generating means for supplying the input optical signal comprising the unique color sequence code to the first optical conductor of the first one of the interconnected optical circuits,
the destination means comprising signal receiving means for receiving a converted optical signal if the color of the converted optical signal corresponds to a destination color associated with the destination node.

7. A communication network as (40) claimed in claim 6, wherein each optical signal further comprises a direction bit for indicating whether the optical signal is traveling towards or away from the central optical conductor.

8. A communication network (40) according to claim 6, wherein the optical conductors are rings of glass fiber arranged in at least two hierarchical layers, the nodes being coupled to one of the rings at a lowest hierarchical layer, each ring at a higher hierarchical layer being coupled to at least one ring at a lower hierarchical layer, each ring at a lower hierarchical layer being coupled to one ring at a higher hierarchical layer, a highest hierarchical layer consisting of one central ring constituting the central optical conductor.

9. An optical signal (51, 52) having a color and comprising data and a color sequence code, the color sequence code defining a path through a communication network via a sequence of optical conductors, each optical conductor of the sequence of optical conductors being coupled to at least one other optical conductor via an optical switch, an output of the optical switch being associated with a color and each subsequent color of the color sequence code corresponding to an output of a subsequent optical switch in the path.

## Patentansprüche

1. Optischer Schalter (15) in einem Kommunikationsnetz, umfassend:
- einen Eingang (101) zum Empfangen eines optischen Eingangssignals (18a), das eine erste Weitergabefarbe aufweist und Daten und einen Farbsequenzcode umfasst, wobei der Farbsequenzcode einen Pfad durch das Kommunikationsnetz definiert,
- einen Ausgang (105), der mit einer zweiten Farbe assoziiert ist,
- mit dem Eingang (101) gekoppelte Farbdetektionsmittel (102) zum Bestimmen, ob die erste Weitergabefarbe der zweiten Farbe entspricht,
- einen mit den Farbdetektionsmitteln (102) gekoppelten Codeextrahierer (103) zum Extrahieren einer nächsten Farbe, die von der ersten Weitergabefarbe verschieden ist, aus dem Farbsequenzcode nur dann, wenn die erste Weitergabefarbe der zweiten Farbe entspricht, und
- einen mit dem Codeextrahierer gekoppelten Codeumsetzer (104) zum Farbumsetzen des optischen Eingangssignals (18a) in die nächste Farbe, um ein umgesetztes optisches Signal (18b) zu erhalten, wobei die nächste Farbe den nächsten Ausgang definiert, zu dem das umgesetzte optische Signal gehen soll,
- wobei der Ausgang (105) zum Ausgeben des umgesetzten optischen Signals (18b) mit dem Farbumsetzer (104) gekoppelt ist.

2. Optische Schaltung (10) zum Routen eines optischen Eingangssignals (18a) von einem ersten optischen Leiter (11) in dem Kommunikationsnetz zu einem zweiten optischen Leiter (12) in dem Kommunikationsnetz, wobei die optische Schaltung einen optischen Schalter (15) nach Anspruch 1 umfasst,
wobei der Farbsequenzcode einen Pfad durch das Kommunikationsnetz über eine Sequenz von optischen Leitern (11, 12, 13), die den ersten optischen Leiter (11) und den zweiten optischen Leiter (12) umfasst, definiert,
wobei der erste optische Leiter (11) zum Bereitstellen des optischen Eingangssignals (18a) mit dem Eingang (101) des optischen Schalters (15) gekoppelt ist,
wobei der zweite optische Leiter (12) zum Empfangen des umgesetzten Signals (18b) mit dem Ausgang (105) des optischen Schalters (15) gekoppelt ist und
wobei die nächste Farbe den optischen Leiter definiert, zu dem das umgesetzte optische Signal nach dem zweiten optischen Leiter gehen soll.

3. Optische Schaltung (10) nach Anspruch 2, die ferner einen weiteren optischen Schalter (17) zum Koppeln des ersten optischen Leiters (11) mit einem vierten optischen Leiter (14) in dem Kommunikationsnetz umfasst, wobei der weitere optische Schalter (17) Folgendes umfasst:
- einen Eingang zum Empfangen des optischen Eingangssignals (18a),
- einen Ausgang, der mit einer vierten Farbe assoziiert und mit dem vierten optischen Leiter (14) gekoppelt ist,
- mit dem Eingang gekoppelte Farbdetektionsmittel zum Bestimmen, ob die erste Farbe der vierten Farbe entspricht,
- einen mit den Farbdetektionsmitteln gekoppelten Codeextrahierer zum Extrahieren einer fünften Farbe, die von der ersten Farbe verschieden ist, aus dem Farbsequenzcode nur dann, wenn die erste Farbe der vierten Farbe entspricht, und
- einen mit dem Codeextrahierer gekoppelten Farbumsetzer zum Farbumsetzen des optischen Eingangssignals (18a) in die fünfte Farbe und zum Erhalten eines weiter umgesetzten optischen Signals (18b),
- wobei der Ausgang zum Ausgeben des weiter umgesetzten optischen Signals (18b) auf den vierten optischen Leiter (14) mit dem Farbumsetzer gekoppelt ist.

4. Optische Schaltung (20) nach Anspruch 2, wobei mindestens einer der optischen Leiter der Sequenz optischer Leiter ein Ring aus Glasfaser (21, 22, 23, 24) ist.

5. Kommunikationsnetz zum Bereitstellen eines Ende-zu-Ende-Kommunikationspfads zwischen einem Quellenknoten und einem Zielknoten, wobei das Kommunikationsnetz den Quellenknoten, den Zielknoten und miteinander verbundene optische Schaltungen nach Anspruch 2 umfasst, wobei der Ende-zu-Ende-Kommunikationspfad mit einem einzigartigen Farbsequenzcode assoziiert ist,
wobei der Quellenknoten mit dem ersten optischen Leiter einer ersten der miteinander verbundenen optischen Schaltungen gekoppelt ist,
wobei der Zielknoten mit dem zweiten optischen Leiter mindestens einer der miteinander verbundenen optischen Schaltungen gekoppelt ist,
wobei der Quellenknoten Signalerzeugungsmittel zum Liefern des optischen Eingangssignals, das den einzigartigen Farbsequenzcode umfasst, an den ersten optischen Leiter der ersten der miteinander verbundenen optischen Schaltungen und mit einer Farbe, die einem Ausgang der ersten der optischen Schaltungen entspricht, umfasst,
wobei der Zielknoten Signalempfangsmittel zum Empfangen eines umgesetzten optischen Signals, wenn die Farbe des umgesetzten optischen Signals einer mit dem Zielknoten assoziierten Zielfarbe entspricht, umfasst.

6. Kommunikationsnetz (40) zum Bereitstellen eines Ende-zu-Ende-Kommunikationspfads zwischen einem Quellenknoten und einem Zielknoten, wobei das Kommunikationsnetz den Quellenknoten, den Zielknoten und miteinander verbundene optische Schaltungen nach Anspruch 2 umfasst,
wobei der Quellenknoten mit dem ersten optischen Leiter einer ersten der miteinander verbundenen optischen Schaltungen gekoppelt ist,
wobei der Zielknoten mit dem zweiten optischen Leiter mindestens einer der miteinander verbundenen optischen Schaltungen gekoppelt ist und mit einem einzigartigen Farbsequenzcode assoziiert ist,
wobei das Kommunikationsnetz ferner einen zentralen optischen Leiter umfasst, wobei der einzigartige Farbsequenzcode einen Pfad von dem zentralen optischen Leiter zu dem Zielknoten definiert, wobei der Ende-zu-Ende-Kommunikationspfad einen Pfad von dem Quellenknoten zu dem zentralen optischen Leiter und den Pfad von dem zentralen optischen Leiter zu dem Zielknoten umfasst,
wobei der Quellenknoten Signalerzeugungsmittel zum Liefern des optischen Eingangssignals, das den einzigartigen Farbsequenzcode umfasst, an den ersten optischen Leiter der ersten der miteinander verbundenen optischen Schaltungen umfasst,
wobei der Zielknoten Signalempfangsmittel zum Empfangen eines umgesetzten optischen Signals, wenn die Farbe des umgesetzten optischen Signals einer mit dem Zielknoten assoziierten Zielfarbe entspricht, umfasst.

7. Kommunikationsnetz (40) nach Anspruch 6, wobei jedes optische Signal ferner ein Richtungsbit zum Angeben, ob sich das optische Signal zu dem zentralen optischen Leiter hin oder von diesem weg ausbreitet, umfasst.

8. Kommunikationsnetz (40) nach Anspruch 6, wobei die optischen Leiter Ringe aus Glasfaser sind, die in mindestens zwei hierarchischen Schichten angeordnet sind, wobei die Knoten in einer niedrigsten hierarchischen Schicht mit einem der Ringe gekoppelt sind, wobei jeder Ring in einer höheren hierarchischen Schicht mit mindestens einem Ring in einer niedrigeren hierarchischen Schicht gekoppelt ist, wobei jeder Ring in einer niedrigeren hierarchischen Schicht mit einem Ring in einer höheren hierarchischen Schicht gekoppelt ist, wobei eine höchste hierarchische Schicht aus einem zentralen Ring besteht, der den zentralen optischen Leiter bildet.

9. Optisches Signal (51, 52), das eine Farbe aufweist und Daten und einen Farbsequenzcode umfasst, wobei der Farbsequenzcode einen Pfad durch ein Kommunikationsnetz über eine Sequenz von optischen Leitern definiert, wobei jeder optische Leiter der Sequenz von optischen Leitern über einen optischen Schalter mit mindestens einem anderen optischen Leiter gekoppelt ist, wobei ein Ausgang des optischen Schalters mit einer Farbe assoziiert ist und jede nachfolgende Farbe des Farbsequenzcodes einem Ausgang eines nachfolgenden optischen Schalters in dem Pfad entspricht.

## Revendications

1. Commutateur optique (15) dans un réseau de communications, comportant :
- une entrée (101) destinée à recevoir un signal optique (18a) d'entrée présentant une première couleur à transmettre et comportant des données et un code à séquence de couleurs, le code à séquence de couleurs définissant un itinéraire à travers le réseau de communications,
- une sortie (105) associée à une deuxième couleur,
- un moyen (102) de détection de couleurs, couplé à l'entrée (101) pour déterminer si la première couleur à transmettre correspond à la deuxième couleur,
- un extracteur (103) de code, couplé au moyen (102) de détection de couleurs, destiné, seulement si la première couleur à transmettre correspond à la deuxième couleur, à extraire du code à séquence de couleurs une couleur suivante différente de la première couleur à transmettre, et
- un convertisseur (104) de couleurs, couplé à l'extracteur de code, destiné à convertir le signal optique (18a) d'entrée vers la couleur suivante pour obtenir un signal optique converti (18b), la couleur suivante définissant la sortie suivante vers laquelle le signal optique converti doit aller,
- la sortie (105) étant couplée au convertisseur (104) de couleurs pour délivrer le signal optique converti (18b).

2. Circuit optique (10) destiné à acheminer un signal optique (18a) d'entrée d'un premier conducteur optique (11) dans un réseau de communications à un deuxième conducteur optique (12) dans le réseau de communications, le circuit optique comportant un commutateur optique (15) selon la revendication 1,
le code à séquence de couleurs définissant un itinéraire à travers le réseau de communications via une suite de conducteurs optiques (11, 12, 13) comportant le premier conducteur optique (11) et le deuxième conducteur optique (12),
le premier conducteur optique (11) étant couplé à l'entrée (101) du commutateur optique (15) pour introduire le signal optique (18a) d'entrée,
le deuxième conducteur optique (12) étant couplé à la sortie (105) du commutateur optique (15) pour recevoir le signal converti (18b), et
la couleur suivante définissant le conducteur optique vers lequel le signal optique converti doit aller après le deuxième conducteur optique.

3. Circuit optique (10) selon la revendication 2, comportant un commutateur optique supplémentaire (17) destiné à coupler le premier conducteur optique (11) à un quatrième conducteur optique (14) dans le réseau de communications, le commutateur optique supplémentaire (17) comportant:
- une entrée servant à recevoir le signal optique (18a) d'entrée,
- une sortie associée à une quatrième couleur et couplé au quatrième conducteur optique (14),
- un moyen de détection de couleurs, couplé à l'entrée pour déterminer si la première couleur correspond à la quatrième couleur,
- un extracteur de code, couplé au moyen de détection de couleurs, destiné, seulement si la première couleur correspond à la quatrième couleur, à extraire du code à séquence de couleurs une cinquième couleur, différente de la première couleur, et
- un convertisseur de couleurs, couplé à l'extracteur de code, destiné à convertir le signal optique (18a) d'entrée vers la cinquième couleur pour obtenir un signal optique converti supplémentaire (18b),
- la sortie étant couplée au convertisseur de couleurs afin de délivrer le signal optique converti supplémentaire (18b) au quatrième conducteur optique (14).

4. Circuit optique (20) selon la revendication 2, au moins un des conducteurs optiques de la suite de conducteurs optiques étant un anneau en fibre de verre (21, 22, 23, 24).

5. Réseau de communications destiné à constituer un itinéraire de communication de bout en bout entre un noeud source et un noeud de destination, le réseau de communications comportant le noeud source, le noeud de destination et des circuits optiques interconnectés selon la revendication 2, l'itinéraire de communication de bout en bout étant associé à un code unique à séquence de couleurs,
le noeud source étant couplé au premier conducteur optique d'un premier des circuits optiques interconnectés,
le noeud de destination étant couplé au deuxième conducteur optique d'un dernier des circuits optiques interconnectés,
le noeud source comportant un moyen de génération de signal servant à fournir le signal optique d'entrée comportant le code unique à séquence de couleurs au premier conducteur optique du premier des circuits optiques interconnectés et présentant une couleur correspondant à une sortie du premier des circuits optiques,
le noeud de destination comportant un moyen de réception de signal servant à recevoir un signal optique converti si la couleur du signal optique converti correspond à une couleur de destination associée au noeud de destination.

6. Réseau (40) de communications destiné à constituer un itinéraire de communication de bout en bout entre un noeud source et un noeud de destination, le réseau de communications comportant le noeud source, le noeud de destination et des circuits optiques interconnectés selon la revendication 2,
le noeud source étant couplé au premier conducteur optique d'un premier des circuits optiques interconnectés,
le noeud de destination étant couplé au deuxième conducteur optique d'un dernier des circuits optiques interconnectés et étant associé à un code unique à séquence de couleurs,
le réseau de communications comportant en outre un conducteur optique central, le code unique à séquence de couleurs définissant un itinéraire du conducteur optique central au noeud de destination, l'itinéraire de communication de bout en bout comportant un itinéraire du noeud source au conducteur optique central et l'itinéraire du conducteur optique central au noeud de destination,
le noeud source comportant un moyen de génération de signal servant à fournir le signal optique d'entrée comportant le code unique à séquence de couleurs au premier conducteur optique du premier des circuits optiques interconnectés,
le noeud de destination comportant un moyen de réception de signal servant à recevoir un signal optique converti si la couleur du signal optique converti correspond à une couleur de destination associée au noeud de destination.

7. Réseau (40) de communications selon la revendication 6, chaque signal optique comportant en outre un bit de sens servant à indiquer si le signal optique circule en s'approchant ou en s'éloignant du conducteur optique central.

8. Réseau (40) de communications selon la revendication 6, les conducteurs optiques étant des anneaux de fibre de verre disposés en au moins deux couches hiérarchiques, les noeuds étant couplés à l'un des anneaux dans la plus basse couche hiérarchique, chaque anneau d'une couche hiérarchique supérieure étant couplé à au moins un anneau d'une couche hiérarchique inférieure, chaque anneau d'une couche hiérarchique inférieure étant couplé à un anneau d'une couche hiérarchique supérieure, la plus haute couche hiérarchique consistant en un anneau central constituant le conducteur optique central.

9. Signal optique (51, 52) présentant une couleur et comportant des données et un code à séquence de couleurs, le code à séquence de couleurs définissant un itinéraire à travers un réseau de communications via une suite de conducteurs optiques, chaque conducteur optique de la suite de conducteurs optiques étant couplé à au moins un autre conducteur optique via un commutateur optique, une sortie du commutateur optique étant associée à une couleur et chaque couleur subséquente du code à séquence de couleurs correspondant à une sortie d'un commutateur optique subséquent sur l'itinéraire.
